# FASCICULE DE BREVET EUROPEEN

(11) **EP 0 553 025 B1**
(45) Date de publication et mention de la délivrance du brevet: **29.07.1998**
(21) Numéro de dépôt: 93400137.1
(22) Date de dépôt: 21.01.1993
(51) Int. Cl.: B32B 17/10, H05B 3/86

(54) **Dispositif destiné à poser un mince fil métallique en ligne droite sur la surface de la pellicule thermoplastique d'un vitrage en verre feuilleté**
Vorrichtung zum geradlinigen Aufbringen eines dünnen Metalldrahtes auf der Oberfläche des thermoplastischen Films einer Verbundglasscheibe
Device for the rectilinear application of a thin metallic wire to the surface of the thermoplastic film of a multilayered glass window

(30) Priorité: 22.01.1992 DE 4201620
(43) Date de publication de la demande: 28.07.1993
(73) Titulaire: SAINT-GOBAIN VITRAGE, 92400 Courbevoie (FR); VEGLA Vereinigte Glaswerke GmbH, 52066 Aachen (DE)
(72) Inventeur: Sancho, Emilio, W-5100 Aachen (DE); Gillner, Manfred, D-5100 Aachen (DE); Pikhard, Siegfried, D-5107 Roetgen (DE); Muller, Karl-Heinz, D-5100 Aachen (DE); Vanaschen, Luc, B-4700 Eupen (BE)
(74) Mandataire: Muller, René

(56) Documents cités:
- BE-A- 662 247
- DE-A- 1 489 307
- DE-A- 2 540 728
- FR-A- 2 162 040
- GB-A- 1 109 042

## Description

La présente invention concerne un dispositif destiné à poser en ligne droite un mince fil métallique sur la surface de la pellicule thermoplastique d'un vitrage en verre feuilleté, comportant un support de fixation rotatif pour la bobine d'alimentation de fil, un galet de pression chauffé pour presser le fil dans la pellicule thermoplastique et un dispositif de guidage pour le fil, entre la bobine d'alimentation et le galet de pression.

Un dispositif de ce type est connu par exemple d'après les documents DE 20 43 706 B2 et FR 2 162 040. Dans ce cas, le fil posé dans la couche intermédiaire de matière plastique d'un vitrage en verre feuilleté doit servir de fil d'antenne, mais en principe, un dispositif de pose d'une telle conception convient cependant aussi pour poser de minces fils métalliques destinés à d'autres fonctions. Par exemple, un tel dispositif de pose permet de poser des fils de résistance pour la réalisation de vitrages chauffants, ou également des fils métalliques destinés simplement à des fins décoratives.

Les fils métalliques utilisés habituellement pour la fabrication de vitrages en verre feuilleté chauffables sont extraordinairement minces. En règle générale, des fils de tungstène d'un diamètre d'environ 20 micromètres conviennent à cet effet. A l'aide du dispositif mentionné plus haut, il est difficile de poser des fils aussi minces suivant des lignes absolument droites. En particulier, il s'est avéré que la tenue mécanique des fils à poser ne reste pas toujours constante, mais que les fils présentent fréquemment des tensions élastiques gui peuvent aboutir à des déformations incontrôlées lors de la pose du fil. Pour l'oeil humain, les déviations des fils par rapport à une ligne droite s'avèrent cependant particulièrement gênantes lorsque les fils sont posés parallèlement à une distance relativement courte les uns des autres, comme c'est le cas par exemple des vitrages feuilletés chauffables à l'électricité.

L'invention a pour but de procurer un dispositif du type spécifié qui soit à même de poser de fins fils métalliques en ligne droite avec une haute reproductibilité et une haute fiabilité.

Le dispositif conforme à l'invention est caractérisé par un frein électromagnétique à moment de freinage réglable agissant sur la bobine d'alimentation de fil, en ce que le dispositif de guidage est constitué de deux galets déviant et amenant ledit fil au galet de pression sons un angle voulu.

Grâce à la présence d'un frein électromagnétique à moment de freinage réglable, le fil, à l'instant de sa fixation sur la surface de la pellicule, est soumis volontairement à une précontrainte définie agissant dans le sens du fil, dont le degré est adapté au calibre du fil en question et à sa qualité. Le degré optimum de la précontrainte et la force de freinage qui y correspond peuvent être déterminés à court terme par quelques essais et la force de freinage, une fois réglée, peut être conservée sans modification pour la qualité de fil en question, les autres conditions étant quant à elles inchangées.

En principe, des freins électromagnétiques de type quelconque conviennent pour la présente invention dans la mesure où ils offrent une possibilité de régulation fine et présentent un domaine de régulation important, en particulier des freins essentiellement constitués d'un moteur électrique avec un inducteur stationnaire et un rotor influencé par l'induction magnétique. Le domaine de régulation du moment de rotation ou du moment de freinage doit, de préférence, couvrir un intervalle d'environ 1:50.

Dans ce cas, des freins dits à poudre magnétique se sont avérés particulièrement adéquats. Les freins à poudre magnétique comprennent un rotor et un élément primaire disposé autour du rotor et comportant une bobine annulaire qui est alimentée en courant continu. Dans l'entrefer entre le rotor et l'élément primaire se trouve une poudre magnétisable. En raison de la magnétisation lors de l'enclenchement du courant, les grains de poudre en quelque sorte s'enchaînent les uns aux autres, la rigidité de cette chaîne variant avec le champ magnétique et étant directement proportionnelle à la valeur du courant appliqué. On obtient ainsi un moment de freinage très uniforme agissant sur le rotor et dont la grandeur est directement proportionnelle au courant appliqué à l'élément primaire.

Des développements et des perfectionnements appropriés du dispositif conforme à l'invention ressortiront des sous-revendications et de la description suivante d'un exemple de réalisation préféré donné avec référence aux dessins annexés.

Dans les dessins annexés :

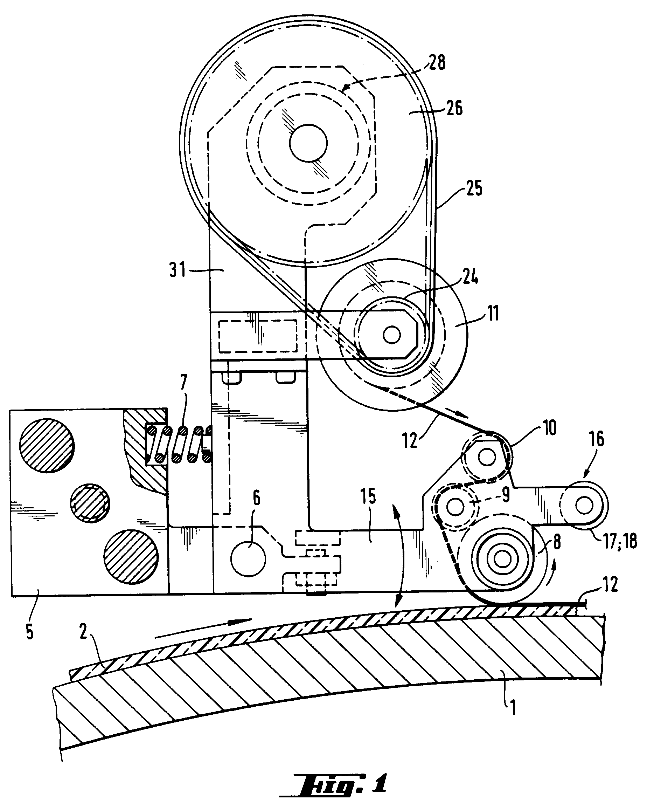

la Fig. 1 est une vue en élévation de côté du dispositif poseur de fil;

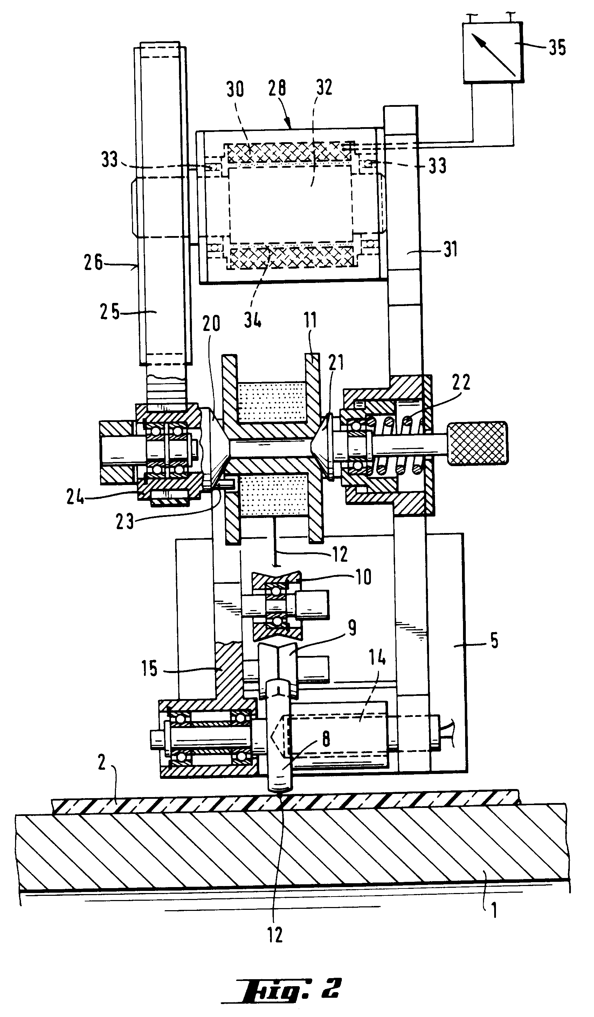

la Fig. 2 est une vue en élévation de face, et

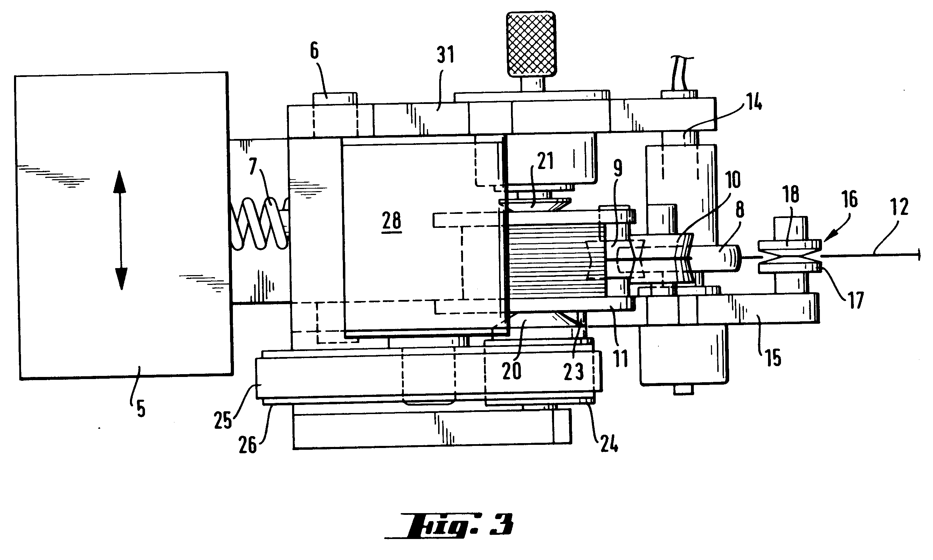

la Fig. 3 est une vue en plan du dispositif.

Le dispositif poseur de fil conforme à l'invention est monté au-dessus d'une surface de support mobile 1 pour la pellicule thermoplastique 2, qui comprend en particulier une pellicule de polybutyral de vinyle, telle qu'elle est habituellement préparée pour des vitrages en verre feuilleté. La surface de support peut avantageusement avoir la forme d'un tambour cylindrique de grand diamètre sur la paroi cylindrique duquel la pellicule est maintenue par dépression. Pendant que le tambour tourne, le dispositif poseur de fil est déplacé à l'intervention d'un entraînement par broche filetée, dans un sens parallèle à l'axe du tambour, de sorte que le fil est, de cette façon., déposé selon une disposition parallèle et avec un espacement réciproque constant, sur la surface de la pellicule.

Sur le support de fixation 5 qui est déplacé lentement dans un sens parallèle à l'axe du tambour à l'aide de l'entrainement par broche filetée, le dispositif poseur de fil proprement dit est monté à pivotement sur un axe de pivotement 6 et est pressé contre le tambour 1, dans sa position de travail, par un ressort 7 qui prend appui sur le support de fixation 5, de sorte que le galet de pression 8 roule sur la surface de la pellicule 2.

Le dispositif poseur de fil comporte, outre le galet de pression 8, deux galets de guidage de fil 9 et 10 ainsi qu'un support de fixation pour la bobine d'alimentation de fil 11. Grâce aux galets de guidage de fil 9 et 10, le fil 12 provenant de la bobine d'alimentation 11 est, d'une part, dévié et amené au galet de pression 8 sous l'angle voulu, et, d'autre part, guidé dans le sens horizontal d'une manière telle qu'il parvienne toujours au galet de pression 8, précisément au milieu de celui-ci. Pour remplir cette fonction de guidage, le galet de guidage supérieur 10 de même que le galet de guidage inférieur 9 ont chacun la forme d'un double cône, de sorte que le fil, sous l'effet de sa tension, occupe toujours la position médiane sur les deux galets de guidage.

Le galet de pression 8 présente une surface de pression bombée de sorte que le fil 12 passe sur la ligne de crête de cette surface de pression bombée. De cette façon, le fil 12 est pressé dans la surface de la pellicule 2, sans que les bords latéraux du galet de pression 8 ne s'enfoncent dans la pellicule 2. La cartouche chauffante électrique 14, qui est également montée sur le bras 15 du dispositif poseur de fil, assure que le galet de pression 8 soit chauffé à la température nécessaire.

Devant le galet de pression 8 et au-dessus de celui-ci est disposé un galet capteur de fil 16 qui est formé de deux disques montés fous 17, 18 qui sont pressés l'un contre l'autre par la sollicitation d'un ressort non représenté, de sorte que, dans la position de repos du dispositif poseur de fil, le fil 12 peut être serré entre les deux disques 17, 18.

Le support de fixation pour la bobine d'alimentation 11 comporte deux mandrins 20, 21 montés à rotation sur des roulements à billes et parmi lesquels le mandrin 21 est monté à coulissement dans le sens de son axe. Il est pressé contre le corps de bobine par un ressort hélicoïdal 22. Le mandrin 20, monté de l'autre côté, est pourvu d'un doigt d'entraînement excentrique 23 qui s'engage dans une forure latérale correspondante de la joue latérale de la bobine d'alimentation et assure un accouplement solide entre le mandrin 20 et la bobine d'alimentation. De plus, le mandrin 20 est pourvu d'une poulie à courroie dentée 24 qui coopère avec une courroie dentée 25. La courroie dentée 25 coopère de l'autre côté avec une poulie à courroie dentée 26 qui est accouplée au rotor d'un frein à poudre magnétique 28.

L'élément primaire en forme de cylindre creux 30 du frein à poudre magnétique est fixé d'une manière adéquate au bras de support 31 du dispositif poseur de fil. Dans le primaire 30, le rotor 32 est monté à rotation sur des roulements à billes 33. La poulie à courroie dentée 26 est reliée au rotor 32. La transmission du moment de freinage souhaité du primaire 30 au rotor 32 s'effectue de la manière décrite plus haut par induction électromagnétique par laquelle la poudre magnétique 34 présente dans l'entrefer entre le primaire 30 et le rotor 32 permet d'obtenir un accouplement adhérent plus ou moins tenace.

Le moment de freinage exercé par le frein à poudre magnétique peut être réglé finement par régulation du courant d'excitation au moyen du régulateur 35 et ce, dans un grand domaine de régulation d'environ 1:50. Le moment de freinage réglé, dont la hauteur est adaptée au fil respectivement utilisé et aux autres conditions de fabrication comme la vitesse de pose, la température de traitement, etc., est maintenu très constant par le frein à poudre magnétique.

## Revendications

1. Dispositif destiné à poser, en ligne droite, un mince fil métallique sur la surface de la pellicule thermoplastique d'un vitrage en verre feuilleté comportant un support de fixation rotatif pour la bobine d'alimentation de fil, un galet de pression chauffé pour presser le fil dans la pellicule thermoplastique et un dispositif de guidage pour le fil, entre la bobine d'alimentation et le galet de pression, **caractérisé en ce qu**'un frein électromagnétique (28) à moment de freinage réglable, agit sur la bobine d'alimentation de fil (11), **en ce que** le dispositif de guidage est constitué de deux galets (9, 10) déviant et amenant ledit fil (12) au galet de pression (8) sous un angle voulu.

2. Dispositif suivant la revendication 1, **caractérisé en ce que** le frein électromagnétique (28) présente un domaine de régulation élevé du moment de freinage d'environ 1 : 50.

3. Dispositif suivant les revendications 1 et 2, **caractérisé en ce que** le frein électromagnétique (28) est un frein à poudre magnétique.

4. Dispositif suivant l'une quelconque des revendications 1 à 3, **caractérisé en ce que** le galet de pression (8) présente une surface de pression de forme bombée.

5. Dispositif suivant l'une quelconque des revendications 1 à 4, **caractérisé en ce que** le dispositif de guidage pour le fil (12) est constitué de deux galets (9, 10) ayant chaque fois la forme d'un double cône.

6. Dispositif suivant l'une quelconque des revendications 1 à 5, **caractérisé en ce que** le frein électromagnétique (28) est monté au-dessus du support de fixation (20, 23) accouplé à rotation à la bobine d'alimentation de fil (11) et le moment de freinage exercé par le frein électromagnétique (28) est transmis au mandrin de support (20) par l'intermédiaire d'un mécanisme à courroie dentée (24, 25, 26).

7. Dispositif suivant l'une quelconque des revendications 1 à 6, **caractérisé en ce qu**'il est pourvu au-dessus du galet de pression (8) d'un galet capteur de fil (16) qui comporte deux disques (17, 18) pressés l'un contre l'autre par la pression d'un ressort et maintenant le fil entre eux dans l'état de repos du dispositif.

8. Dispositif suivant l'une quelconque des revendications 1 à 7, **caractérisé en ce qu**'il est monté mobile sur un palier de pivotement (6) et, dans sa position de travail, il est pressé par un ressort (7) contre la pellicule thermoplastique (2) sur laquelle le fil (12) doit être posé.

## Claims

1. Device for laying, in a straight line, a thin metal wire on the surface of the thermoplastic film of a laminated glass glazing having a rotary fixing support for the wire supply reel, a heated pressure roller for pressing the wire into the thermoplastic film and a device for guiding the wire between the supply reel and the pressure roller, characterized in that an electromagnetic brake (28) having a regulatable brake torque acts on the wire supply reel (11) and that the guidance device is constituted by two rollers (9, 10) deflecting and supplying said wire (12) to the pressure roller (8) under a desired angle.

2. Device according to claim 1, characterized in that the electromagnetic brake (28) has a large brake torque regulating range of approximately 1:50.

3. Device according to claims 1 and 2, characterized in that the electromagnetic brake (28) is a magnetic powder brake.

4. Device according to any one of the claims 1 to 3, characterized in that the pressure roller (8) has a cambered pressure surface.

5. Device according to any one of the claims 1 to 4, characterized in that the guidance device for the wire (12) is constituted by two rollers (9, 10), each of which is biconical.

6. Device according to any one of the claims 1 to 5, characterized in that the electromagnetic brake (28) is mounted above the fixing support (20, 23) rotationally coupled to the wire supply wheel (11) and the brake torque exerted by the electromagnetic brake (28) is transmitted to the support mandrel (20) by means of a toothed belt mechanism (24, 25, 26).

7. Device according to any one of the claims 1 to 6, characterized in that, above the pressure roller (8), it is provided with a wire pick-up roller having two disks (17, 18) pressed against one another by the pressure of a spring and maintaining the wire between them in the inoperative state of the device.

8. Device according to any one of the claims 1 to 6, characterized in that it is mounted in mobile manner on a pivot bearing (6) and, in its working position, is pressed by a spring (7) against the thermoplastic film (2) on which the wire (12) is to be laid.

## Patentansprüche

1. Vorrichtung zum geradlinigen Verlegen eines dünnen Metalldrahtes auf der Oberfläche der thermoplastischen Folie einer Verbundglasscheibe, umfassend
- eine drehbare Halterung für die Drahtvorratsspule,
- eine den Draht in die Folie eindrückende beheizte Druckrolle,
- eine Vorrichtung zum Führen des Drahts zwischen der Drahtvorratsspule und der Druckrolle, **dadurch gekennzeichnet**,
daß eine elektromagnetische Bremse (28) mit einstellbarem Bremsmoment auf die Drahtvorratsspule (11) einwirkt und
daß die Führungsvorrichtung durch zwei den Draht (12) umlenkenden und ihn der Druckrolle (8) unter einem gewünschten Winkel zuführenden Rollen (9, 10) gebildet ist.

2. Vorrichtung nach Anspruch 1, **dadurch gekennzeichnet**, daß die elektromagnetische Bremse (28) einen großen Bremsmoment-Regelbereich von etwa 1 : 50 aufweist.

3. Vorrichtung nach den Ansprüchen 1 und 2, **dadurch gekennzeichnet**, daß die elektromagnetische Bremse (28) eine Magnetpulverbremse ist.

4. Vorrichtung nach einem der Ansprüche 1 bis 3, **dadurch gekennzeichnet**, daß die Druckrolle (8) eine ballig ausgebildete Druckfläche aufweist.

5. Vorrichtung nach einem der Ansprüche 1 bis 4, **dadurch gekennzeichnet**, daß Vorrichtung zum Führen des Drahts (12) durch zwei jeweils doppelkegelförmige Rollen (9, 10) gebildet ist.

6. Vorrichtung nach einem der Ansprüche 1 bis 5, **dadurch gekennzeichnet**, daß die elektromagnetische Bremse (28) oberhalb der mit der Drahtvorratsspule (11) drehgekoppelten Halterung (20, 23) angeordnet ist und das von der elektromagnetischen Bremse (28) ausgeübte Drehmoment durch ein Zahnriemengetriebe (24, 25, 26) auf den Haltedorn (20) übertragen wird.

7. Vorrichtung nach einem der Ansprüche 1 bis 6, **dadurch gekennzeichnet**, daß sie oberhalb der Druckrolle (8) mit einer Drahtfangrolle (16) versehen ist, die zwei durch Federdruck gegeneinander gepreßte und den Draht im Ruhezustand der Vorrichtung zwischen sich haltende Scheiben (17, 18) umfaßt.

8. Vorrichtung nach einem der Ansprüche 1 bis 7, dadurch gekennzeichnet, daß sie über ein Schwenklager (6) verschwenkbar gelagert ist und in ihrer Arbeitsstellung durch eine Feder (7) gegen die mit dem Draht (12) zu belegende thermoplastische Folie (2) gedrückt wird.
